# EUROPÄISCHE PATENTSCHRIFT

(11) **EP 1 650 110 B1**
(45) Veröffentlichungstag und Bekanntmachung des Hinweises auf die Patenterteilung: **23.01.2008**
(21) Anmeldenummer: 05020537.6
(22) Anmeldetag: 21.09.2005
(51) Int. Cl.: B62D 25/10, E05B 65/19, E05C 19/16

(54) **Frontklappe für Fahrzeuge**
Bonnet for a vehicle
Capot pour un véhicule

(30) Priorität: 22.10.2004 DE 102004051484
(43) Veröffentlichungstag der Anmeldung: 26.04.2006
(73) Patentinhaber: AUDI AG, 85045 Ingolstadt (DE)
(72) Erfinder: Moser, Sibylle, 85051 Ingolstadt (DE)
(74) Vertreter: Engelhardt, Harald

(56) Entgegenhaltungen:
- EP-A- 1 580 364
- DE-A1- 10 163 820
- FR-A- 696 676
- FR-A- 2 722 232
- US-A1- 2004 130 182
- PATENT ABSTRACTS OF JAPAN Bd. 017, Nr. 237 (M-1408), 13. Mai 1993 (1993-05-13) & JP 04 362479 A (MAZDA MOTOR CORP), 15. Dezember 1992 (1992-12-15)

## Beschreibung

Die Erfindung bezieht sich auf eine Frontklappe für Fahrzeuge, wobei die Frontklappe um eine horizontale Achse im Anschlussbereich der Windschutzscheibe schwenkbar ist, wobei die Frontklappe eine Vorrichtung zum Ver- und Entriegeln in ihrer Schließstellung aufweist, wobei mindestens eine zusätzliche Halteeinrichtung für die geschlossene Frontklappe vorgesehen ist, wobei sich die Halteeinrichtung zwischen der Frontklappe und einem sich anschließenden Bauteil im Bereich der vorderen Ecke der Frontklappe erstreckt, und wobei die Halteeinrichtung als Halteelement einen Magneten aufweist.

Eine derartige Frontklappe ist aus der DE 101 63 820 A1 bekannt. Zum Schutz von Fußgängern und Zweiradfahrern ist die Frontklappe von einer Ruheposition durch eine Hubvorrichtung in eine angehobene Aufprallposition verlagerbar. Die Hubvorrichtung umfasst einen feststehenden Magnetteil und einen gegenüber diesem beweglich angeordneten und mit der Frontklappe gekoppelten beweglichen Magnetteil. Zwischen den Magnetteilen wirkt eine Magnetkraft, über die die Fronthaube beim Aufprall eines Fußgängers oder Zweiradfahrers angehoben wird.

Die JP 04 362479 A beschreibt - Maßnahmen zur Erhöhung der Steifigkeit von Fahrzeugkarosserien. Dabei können zur Verbesserung der Torsionssteifigkeit bei Kurvenfahrten über Elektromagnete die Front- und Heckklappe mit der Karosserie verbunden werden.

Aus der EP-A-1 580 364 ist es bekannt, die Frontklappe mit Seitenteilen des Vorbaus zu verriegeln, damit bei einem Frontaufprall ein möglichst großer Teil der kinetischen Energie in Verformungsarbeit umgesetzt wird. Um dabei gleichzeitig zu erreichen, dass die Frontklappe bei einem Fußgängeraufschlag nachgeben kann, sind die Riegel der Verriegelungseinrichtung mit einer Keilfläche versehen, derart, dass beim Schließen der Frontklappe und bei einer Krafteinwirkung ab einer vorbestimmten Größenordnung die Riegel gegen die Kraft einer Feder zurückweichen. Die Verriegelungselemente können auch durch Elektromagnete betätigbar sein und die Elektromagnete unterschiedlich angesteuert werden. Dadurch ist es möglich, dass zwei einander gegenüberliegende Riegel in Eingriff bleiben und ein Scharnier bildern, während alle übrigen Riegel durch die Elektromagneten zurückbewegt werden.

Es ist üblich, eine Frontklappe für Fahrzeuge, insbesondere für Personenkraftwagen, so auszubilden, dass diese in ihrem rückwärtigen Bereich gelagert ist und im Frontbereich eine Vorrichtung zum Ver- und Entriegeln aufweisen. Während das Verriegeln selbsttätig beim Schließen der Frontklappe erfolgt, ist zum Entriegeln eine Verbindung zu einem Betätigungselement im Fahrgastraum vorgesehen. Die Vorrichtung zum Ver- und Entriegeln der Frontklappe ist in den meisten Fällen in der Mitte des vorderen Frontklappenbereiches angeordnet. Seitlich der Vorrichtung zum Ver- und Entriegeln der Frontklappe, meist in Nähe der vorderen Ecken der Frontklappe, sind elastisch nachgiebige Anschlagpuffer vorgesehen.

Bei hohen Fahrgeschwindigkeiten kann es vorkommen, dass die vorderen Ecken der Frontklappe durch die Windlast angehoben werden. Dieser Effekt wird verstärkt durch die Frontklappen neuerer Bauart, die speziell in Bezug auf einen verbesserten Fußgängerschutz ausgebildet sind. Um einen guten Fußgängerschutz zu erreichen, werden die Frontklappen relativ weich ausgeführt.

Um einem Anheben der vorderen Eckbereiche der Frontklappe entgegen zu wirken, könnten zwei . Haubenschlösser, angeordnet in den vorderen Endbereichen, vorgesehen werden. Zwei Schlösser und deren Betätigungseinrichtungen sind relativ teuer und aufgrund baulicher Gegebenheiten, wie bspw. bei bestimmten Scheinwerfertypen, nicht ohne weiteres realisierbar.

Der Erfindung liegt deshalb die Aufgabe zugrunde, mit einfachen Mitteln sicher zu stellen, dass auch bei einer relativ weichen Frontklappe diese auch in ihren vorderen Eckbereiche zuverlässig gehalten ist.

Die Aufgabe wird dadurch gelöst, dass das Halteelement für die Frontklappe ein Elektromagnet ist, und dass die Ansteuerung des Elektromagneten in Abhängigkeit von der Fahrgeschwindigkeit des Fahrzeuges erfolgt, derart, dass der Elektromagnet erst ab einer vorgegebenen Mindestgeschwindigkeit mit Strom beaufschlagt wird.

Ein Elektromagnet ist eine einfache und kostengünstige Lösung, die wenig Platz beansprucht. Deshalb kann ein Elektromagnet für den vorgeschlagenen Zweck auch bei beengten Platzverhältnissen realisiert werden. Es ist sowohl möglich, den Elektromagneten an der Frontklappe, aber auch an einem sich anschließenden Bauteil zu befestigen. Die Form und die Unterbringung des Elektromagneten kann an die speziellen Verhältnisse leicht angepasst werden. Die Haltekraft des Elektromagneten wird so bemessen, dass er einerseits eine genügend hohe Haltekraft zum Fixieren der Frontklappe auch bei hohen Geschwindigkeiten aufweist, andererseits keine wesentlich höhere Betätigungskraft beim Anheben der entriegelten Frontklappe erfordert.

Ein Elektromagnet muss, um seine Haltekraft nutzen zu können, stets mit Strom beaufschlagt werden. Dieser, meist nicht erwünschte Effekte wird gemäß der Erfindung dadurch vermieden, dass die Ansteuerung des Elektromagneten in Abhängigkeit von der Fahrgeschwindigkeit des Fahrzeuges erfolgt, derart, dass der Elektromagnet erst ab einer vorgegebenen Mindestgeschwindigkeit mit Strom beaufschlagt wird. Diese stromsparende Vorgehensweise ist in ihrer Wirkung nicht nachteilig. Da durch die vorgeschlagene Halteeinrichtung das Anheben der Frontklappe vermieden werden soll, dieses Anheben jedoch nur bei höheren Geschwindigkeiten auftritt, kann die Halteeinrichtung bei niedrigen Geschwindigkeiten ohne weiteres unwirksam sein.

## Patentansprüche

1. Frontklappe für Fahrzeuge, wobei die Frontklappe um eine horizontale Achse im Anschlussbereich der Windschutzscheibe schwenkbar ist, wobei die Frontklappe eine Vorrichtung zum Ver- und Entriegeln in ihrer Schließstellung aufweist, wobei mindestens eine zusätzliche Halteeinrichtung für die geschlossene Frontklappe vorgesehen ist, wobei sich die Halteeinrichtung zwischen der Frontklappe und einem sich anschließenden Bauteil im Bereich der vorderen Ecke der Frontklappe erstreckt, wobei die Halteeinrichtung als Halteelement einen Magneten aufweist, und wobei das Halteelement ein Elektromagnet ist,und **dadurch gekennzeichnet, dass** die Ansteuerung des Elektromagneten in Abhängigkeit von der Fahrgeschwindigkeit des Fahrzeuges erfolgt, derart, dass der Elektromagnet erst ab einer vorgegebenen Mindestgeschwindigkeit mit Strom beaufschlagt wird.

## Claims

1. Bonnet for vehicles, wherein the bonnet is pivotable about a horizontal axis in the connection area of the windscreen, wherein the bonnet has a device for locking and unlocking in its closing position, wherein at least one additional holding apparatus for the closed bonnet is provided, wherein the holding apparatus extends between the bonnet and an adjoining component in the region of the front corner of the bonnet, wherein the holding apparatus comprises a magnet as a holding element and wherein the holding element is an electromagnet, and **characterised in that** the control of the electromagnet takes place depending on the speed of travel of the vehicle, such that the electromagnet has current applied to it only above a predetermined minimum speed.

## Revendications

1. Abattant avant pour véhicules, l'abattant avant pouvant pivoter autour d'un axe horizontal dans la zone de raccordement du pare-brise, l'abattant avant présentant un dispositif de verrouillage et de déverrouillage dans sa position de fermeture, au moins un dispositif de retenue supplémentaire étant prévu pour l'abattant avant fermé, le dispositif de retenue s'étendant entre l'abattant avant et un élément de construction se raccordant dans la zone du coin avant de l'abattant avant, le dispositif de retenue présentant un aimant comme élément de retenue, l'élément de retenue étant un électroaimant, et **caractérisé en ce que** l'excitation de l'électroaimant dépend de la vitesse de circulation du véhicule de sorte que l'électroaimant n'est alimenté en courant qu'à partir d'une vitesse minimale prédéfinie.
